# EUROPEAN PATENT APPLICATION

(11) **EP 4 807 565 A1**
(43) Date of publication of application: **16.09.2026**
(21) Application number: 25163436.6
(22) Date of filing: 13.03.2025
(51) Int. Cl.: G06F 11/3668, G06N 3/045, G06N 3/084

(54) **A METHOD FOR GENERATING TEST CASES FOR TESTING A SOFTWARE PROGRAM**

(71) Applicant: Robert Bosch GmbH, 70442 Stuttgart (DE)
(72) Inventor: Nicolae, Maria Irina, 70197 Stuttgart (DE)

(57) **Abstract**

The invention relates to a method (100) for generating test cases for testing a software program, comprising:
- Training (101) a first machine learning model (1) for a next-token prediction based on a training data set, the training data set comprising test cases for testing the software program in a code format,
- Providing (102) a labelled training data set, the labelled training data set comprising test cases that are each associated with at least one characteristic of the software program,
- Performing (103) a respective fine-tuning of the trained first machine learning model (1) for the next-token prediction based on the labelled training data set for each characteristic of the software program to provide a specialized machine learning model (2) for each respective characteristic,
- Generating (104) the test cases for testing the software program for at least one of the characteristics of the software program by utilizing the first machine learning model (1) and/or a respective specialized machine learning model (2) that was fine-tuned for said at least one of the characteristics.

## Description

The invention relates to a method for generating test cases for testing a software program. Furthermore, the invention relates to a computer program, an apparatus, and a storage medium for this purpose.

### State of the art

State-of-the-art fuzzers use predefined standard modifications of existing valid test cases to produce new test cases. These techniques usually require an extended testing time to discover bugs and crashes, due to their high randomness and their complete lack of awareness of the input format used for testing (e.g., PDF or CAN).

In Patrice Godefroid, Hila Peleg, and Rishabh Singh: "Learn&fuzz: Machine learning for input fuzzing." In Proceedings of the 32nd IEEE/ACM International Conference on Automated Software Engineering, ASE '17, page 50-59. IEEE Press, 2017, it is proposed to learn an input format of a program (in their case, PDF documents) using a machine learning model.

One of the main limitations of the approaches in the state of the art is that learning to generate correct test cases according to a given format (e.g., PDF or CAN) will result in valid test cases, which have low odds of triggering bugs and crashes in the program. Moreover, the system must be able to generate new and random test cases that are capable to discover new bugs and vulnerabilities.

### Disclosure of the invention

According to aspects of the invention a method with the features of claim 1, a computer program with the features of claim 8, a data processing apparatus with the features of claim 9 as well as a computer-readable storage medium with the features of claim 10 are provided. Further features and details of the invention are disclosed in the respective dependent claims, the description and the drawings. Features and details described in the context to the inventive method also correspond to the inventive computer program, the inventive data processing apparatus as well as the inventive computer-readable storage medium, and vice versa in each case.

According to an aspect of the invention a method for generating test cases for testing a software program is provided, comprising:
- Training a first machine learning model for a next-token prediction based on a (first) training data set, the training data set comprising test cases for testing the software program in a code format or text format, wherein the training may be performed self-supervised and the training data set may be unlabelled, wherein the test cases are particularly specific inputs for a test run, i.e. for example a specific network protocol code format or text format like CAN, HTTP or PDF,
- Providing a labelled (second) training data set, the labelled training data set comprising test cases that are each associated with at least one characteristic of the software program,
- Performing a respective fine-tuning of the trained first machine learning model for the next-token prediction based on the labelled training data set for each characteristic of the software program to provide a specialized machine learning model for each respective characteristic,
- Generating the test cases for testing the software program for at least one of the characteristics of the software program by utilizing the first machine learning model and/or a respective specialized machine learning model that was fine-tuned for said at least one of the characteristics, wherein the generation of a respective test case may be stopped either after a given number of tokens or when the respective machine learning model(s) issue(s) a special token, for example "end of sequence".

The first machine learning model may advantageously learn a general structure and syntax rules of the software program's language during the training. The training for the next-token prediction may involve teaching the respective machine learning model to predict a most likely subsequent token in a sequence, given a preceding context. This process may use large datasets comprising sequences of text, in the present case particularly the test cases, where the respective machine learning model may learn patterns, grammar, and contextual relationships between tokens. During the training, the input sequence may be fed into the respective machine learning model, which may generate a probability distribution over the possible next tokens. The predicted token may be compared to the actual next token using a loss function, for example cross-entropy loss, which may quantify a prediction error. The respective machine learning model's parameters may then be optimized using techniques like gradient descent and backpropagation to minimize this loss. Through numerous iterations over the data (epochs), the respective machine learning model may incrementally improve its ability to predict the next token accurately. Regularization methods, learning rate adjustments, and validation against separate datasets may also be applied during the training to prevent overfitting.

The method according to the invention may improve an accuracy and effectiveness of a generation of test cases by means of the specialized machine learning models that are fine-tuned using the labelled training data set that link specific test cases to characteristics like known vulnerabilities or bug types. This may allow to learn the patterns associated with particular issues and generate targeted test cases aimed at uncovering those vulnerabilities. The use of the specialized machine learning models may enable a faster vulnerability discovery by focusing on generating inputs likely to trigger specific weaknesses. Additionally, this targeted approach according to the invention may reduce an overall testing time required compared to traditional random fuzzing methods, which can be particularly beneficial for resource-intensive embedded systems like ECUs.

It is further possible that the machine learning model is a transformer model and the training is particularly performed by using a gradient descent and/or backpropagation algorithm.

A transformer model is particularly a type of deep learning architecture primarily designed for handling sequential data, such as natural language. It particularly departs from traditional recurrent neural networks (RNNs) by employing a self-attention mechanism that allows the transformer model to weigh the importance of different input tokens relative to each other, irrespective of their positions. This architecture may comprise a decoder-only or an encoder-decoder structure, where both components are composed of layers that include multi-head self-attention mechanisms and position-wise feed-forward networks, supplemented by positional encodings to retain order information. The transformer's parallelization capabilities may significantly improve training efficiency.

The transformer architecture may advantageously demonstrate an effectiveness in natural language processing tasks, which may be analogous to understanding the code format, i.e. particularly the tested input format. The training process may leverage gradient descent and/or backpropagation algorithms to optimize the machine learning model's parameters by adjusting them based on the difference between predicted and actual outputs.

It is possible that a respective characteristic of the software program represents a specific vulnerability and/or a specific bug that is triggered and/or a customer specific adaptation and/or a product specific adaptation of the software program. It is thus possible to tailor test cases to target specific vulnerabilities, bugs, or even customizations unique to a customer or product. A specific bug may be, for example, a memory leak or syntax error. This focused approach may allow for a more efficient identification and resolution of issues. By identifying patterns associated with these characteristics, the machine learning model(s) may generate test cases specifically designed to uncover them, leading to a faster and more effective testing.

It is also possible that the method further comprises:
- Testing the software program via fuzz testing using the generated test cases, wherein the testing may comprise reading sensors and/or controlling actuators of a technical system such as a vehicle, particularly by means of an electronic control unit of the vehicle, or performing a communication between different electronic control units of the vehicle,
- Documenting errors or exceptions that arise during the testing.

This testing process may systematically identify and record software defects. The documentation may be invaluable for developers to understand the nature of the issues and prioritize their resolution. By integrating fuzz testing and error documentation, the invention provides a comprehensive approach to software quality assurance, leading to a more robust and reliable software program. Vulnerabilities present in ECUs across the vehicle may have a very large impact on safety in the vehicle. The discovery of even the smallest denial of service attack against a module that renders it unable to respond to diagnostic messages or normal operating messages, may keep the ECU from performing its critical task in the vehicle. Consider, for instance, a brake module. If a repeated DoS attack is performed within the vehicle network while it is in motion may render the braking system useless. Similar issues may occur with Occupant Constraint Modules (airbags). A remote access vulnerability to a module such as Telematics may allow an attacker to inject CAN messages onto the bus that could exploit such vulnerabilities remotely. Another example may be an attack against a keyless entry module and powertrain/body control module. Given security holes, and the proper knowledge, an attacker may open the vehicle, start it, and drive away. These cases should, for example, be considered within the testing of the software program.

Fuzz testing is particularly an automated software testing technique that involves providing invalid, unexpected, or random data as inputs to the software program. The software program may then be monitored for exceptions such as crashes, failing built-in code assertions, or potential memory leaks to then document these exceptions. For the fuzz testing, a fuzzer may be used if the software program takes structured inputs. This structure may be specified, e.g., in a file format or protocol and distinguishes valid from invalid input. An effective fuzzer particularly generates semi-valid inputs that are "valid enough" such that they are not directly rejected due to structural issues, but that generate unexpected behaviors deeper in the program and are "invalid enough" to expose corner cases that have not been properly dealt with.

The fuzz testing may be performed as follows. A fuzzer may request one or more test cases from the trained and/or fine-tuned (specialized) machine learning model(s). In the case of multiple (specialized) machine learning models, the fuzzer may use multiple strategies to request test cases from the (specialized) machine learning models. Some examples are: requesting a fixed number of test cases from each (specialized) machine learning model, or proceed in a roundrobin generation, or randomize the number of test cases requested from each (specialized) machine learning model. The fuzzer may then run each of the generated test cases on the software program and observe if it produces an error or not and then document the errors or exceptions that arise during the testing.

It is possible that the method further comprises:
- Performing a further fine-tuning for the next-token prediction of the first machine learning model and/or at least one of the specialized machine learning models based on the documented errors, particularly based on test cases where the documented errors or exceptions arose during the testing.

It is possible that this further fine-tuning step allows the machine learning model(s) to learn from specific error or exception patterns, enhancing their ability to generate test cases that are more likely to uncover similar issues in the future. This iterative refinement process may lead to a more robust and effective testing strategy by continuously incorporating error or exception data into the training process.

It is further possible that the method further comprises:
- Storing the specialized machine learning models as a differential to the first machine learning model,
wherein generating the test cases further comprises:
- Loading the first machine learning model and a respective stored differential,
- Applying a unifying operation to recover a respective specialized machine learning model associated with the stored differential.

This feature may allow for a more efficient storage and retrieval of the specialized machine learning models. By storing only the differentials between each specialized model and the initial, first machine learning model, less storage space may be required. Furthermore, loading a specialized machine learning model may be faster as only the necessary differential needs to be applied to the base model, i.e. the first machine learning model, rather than loading the entire specialized machine learning model from scratch. This approach may also enable easier updates and maintenance of the specialized machine learning models, as changes may be implemented as new differentials without affecting the base model, i.e. the first machine learning model.

It is possible that the software program is intended for a use in an electronic control unit (ECU) of a vehicle and the code format corresponds to a communication protocol, particularly pertaining to a control area network (CAN) bus. The trained machine learning model(s) may thus be specialized for generating test cases related to vehicle communication protocols, such as those used in CAN buses. This may allow for a targeted testing of software within ECUs, focusing, for example, on potential vulnerabilities within communication interactions between different electronic control units within the vehicle. The fine-tuned specialized machine learning models may learn specific patterns and sequences within the communication protocol that are susceptible to errors or exploitation, leading to a more efficient identification of security weaknesses in automotive systems.

In another aspect of the invention, a computer program may be provided, in particular a computer program product, comprising instructions which, when the computer program is executed by at least one computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, at least one computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by at least one computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method. Alternatively or additionally, at least one of the disclosed method steps may be computer-implemented and/or automated.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, computer program, a vehicle with an electronic control unit, a storage medium and apparatus according to embodiments of the invention,
- Fig. 2:: Different setups for performing a method according to embodiments of the invention.

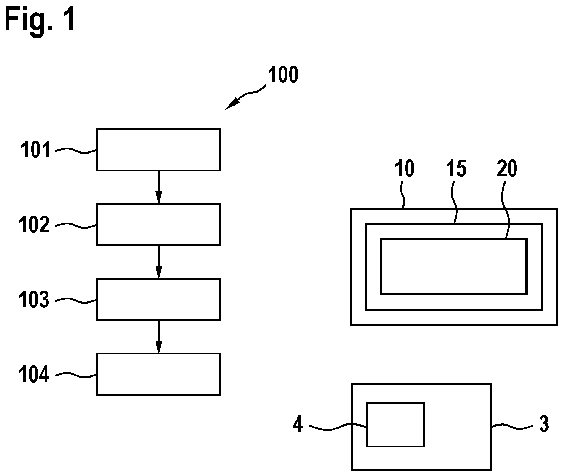

Fig. 1 shows a method 100, a vehicle 3 with an electronic control unit 4, a computer program 20, a storage medium 15 and an apparatus 10 according to embodiments of the invention.

Fig. 1 particularly shows an embodiment for a method 100 for generating test cases for testing a software program. In a first step 101, a first machine learning model 1 is trained for a next-token prediction based on a training data set, the training data set comprising test cases for testing the software program in a code format. In a second step 102, a labelled training data set is provided, the labelled training data set comprising test cases that are each associated with at least one characteristic of the software program. In a third step 103, a respective fine-tuning of the trained first machine learning model 1 for the next-token prediction is performed based on the labelled training data set for each characteristic of the software program to provide a specialized machine learning model 2 for each respective characteristic. In a fourth step 104, the test cases for testing the software program are generated for at least one of the characteristics of the software program by utilizing the first machine learning model 1 and/or a respective specialized machine learning model 2 that was fine-tuned for said at least one of the characteristics.

Embodiments of the present invention particularly relate to a dynamic software testing method called fuzzing. In the following, terminology regarding fuzzing that is used in the context of the present invention is explained.

Fuzzing, or fuzz testing, is particularly an automated software testing technique that involves providing invalid, unexpected, or random data as inputs to a software program. The software program may then be monitored for exceptions such as crashes, failing built-in code assertions, or potential memory leaks. Typically, fuzzers may be used to test programs that take structured inputs. This structure may be specified, e.g., in a file format or protocol and distinguishes valid from invalid input. An effective fuzzer particularly generates semi-valid inputs that are "valid enough" such that they are not directly rejected due to structural issues, but that generate unexpected behaviors deeper in the program and are "invalid enough" to expose corner cases that have not been properly dealt with.

So in short, fuzz testing or fuzzing is particularly an automated process of sending randomly generated input to a target software program and monitoring its reaction.

A fuzzer or fuzzing engine is particularly a program that automatically generates inputs. Hence, they may not be connected to any software under test, nor is there any instrumentation done. However, they may have capabilities to instrument code, generate test cases and run programs under test. Examples are afl and libfuzzer.

A fuzz target is particularly a software program, i.e. particularly the software program according to the invention, or function that is intended to be tested via fuzzing. A main characteristic of a fuzz target may be that it consumes potential untrusted input, which will be generated by the fuzzer during the fuzzing process.

A fuzz test may be a combined version of a fuzzer and a fuzz target. A fuzz target may then be instrumented code with a fuzzer attached to its inputs. A fuzz test may be executable. The fuzzer may also start, observe and stop multiple running fuzz tests (f.e. hundreds or thousands per second), each with a slightly different input generated by the fuzzer.

A test case is particularly one specific input for a test run. For reproducibility, interesting runs (finding new code paths or crashes) may be saved. That way a specific test case, with its corresponding input, may also be run on a fuzz target, which is not connected to a fuzzer, i.e., in its release version. Generation-based fuzzing is particularly using previous knowledge about the target program to craft test inputs. A popular example are grammars that match the input specification.

Mutation-based fuzzing may generate new program inputs by introducing small changes to existing inputs (also known as seeds) that may still keep the input valid, yet exercise new behavior.

A seed is particularly an initial program input to be used as starting point for mutation-based fuzzing. Seeds may be provided by a user.

A goal of a fuzzer is particularly to find test cases that are able to trigger crashes in the
tested (target) software program, which in turn may lead to finding bugs and vulnerabilities in the code of the software program. Generation-based fuzzers may generate test cases from scratch, based on existing information about the program or its input format. Typically, a grammar of the input format may be used; however, deriving the grammar may be challenging when one is not available, or when an implementation does not exactly match a specification (e.g., a standard, a formal specification).

Advances in machine learning, especially in generative models, may provide an opportunity to solve the problem of test case generation without needing access to a grammar. Example applications particularly relate to fuzz testing, for example, controller area network (CAN) bus fuzz testing or the testing of other communications
protocols.

According to embodiments of the invention, a synthetic test case generation for software testing in a fuzzing setup is performed. This may help, e.g., automotive manufacturers and technicians in identifying vulnerabilities in a software program, particularly in ECUs. Further, a more efficient use of testing time is provided by discovering issues faster and requiring less test runs in total. This may be particularly important for embedded systems, which may be slow to run and may require time to reset for each test.

According to embodiments of the invention, a method for generating synthetic test cases for fuzz testing based on machine learning and a transformer architecture is provided. The method according to the invention may allow to generate new test cases from a learned code format with different degrees of stochasticity and fidelity to the code format.

The method according to embodiments of the invention may follow the steps outlined below, which will be detailed further on. In a first step, training data may be provided, particularly including a labelling when necessary. In a next step, at least one machine learning model may be trained and/or fine-tuned based on said training data. In a next step, a fuzz testing may be performed utilizing the trained machine learning model(s).

The at least one machine learning model is preferably a transformer model. Transformer models are particularly a neural network architecture capable of processing sequential inputs, such as a textual or binary input format, in an efficient, parallelized way. The task of generating test cases may be framed as a next-token generation task: given a potentially empty start input, the machine learning model may predict a next token in a sequence. This may be done recurrently, each time adding a newly generated token to what was generated so far and using it for the next iteration. The generation particularly stops either after a given number of tokens N or when the machine learning model issues a special token for "end of sequence". Two types of transformer architectures may be applied to the test case generation according to the invention: encoder-decoder architectures and decoder-only architectures. Both of these may able to perform the next token generation according to the invention.

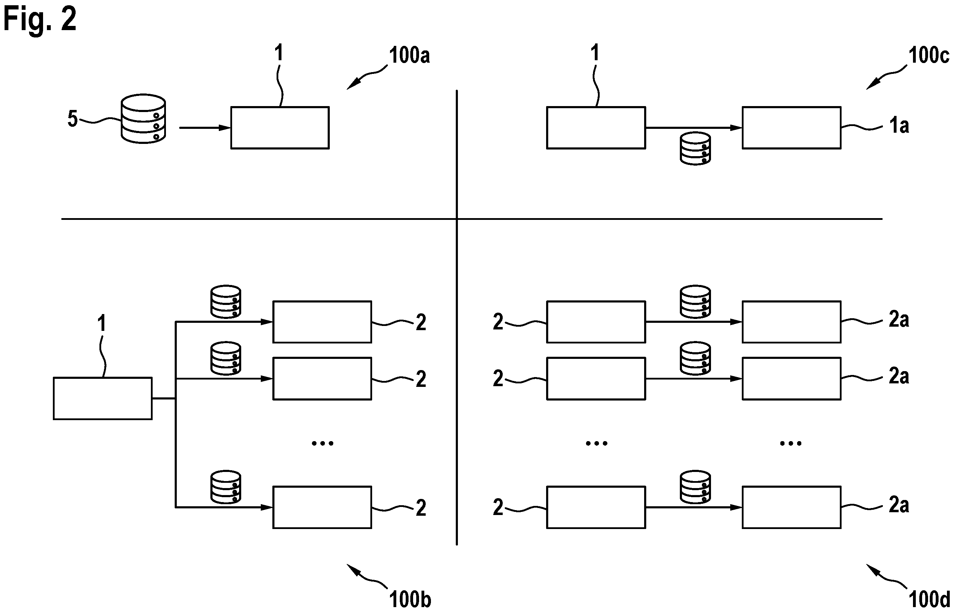

Fig. 2 shows different setups for performing a method according to the invention.

The training of the first machine learning model may be performed as follows. According to embodiments of the invention, a base setup 100a may be used for training the first machine learning model, i.e. preferably the transformer model, and multiple variations may then further specialize the machine learning model to specific characteristics of the software program, all relying on the base setup 100a.

The base setup 100a shown in Fig. 2 may involve a self-supervised training for next-token prediction. This setup particularly requires a (first) training data set 5 in the form of test cases from a targeted format accepted by the software program under test (e.g., CAN data), but may not require any labels for the training data. In this setting, the chosen transformer architecture of the first machine learning model 1 may be trained from scratch using, for example, gradient descent and backpropagation algorithms (e.g., SGD, Adam, AdamW), based on the collected data. The resulting trained transformer model 1, which may be called *T^{base}* model in the context of the present invention, may already be used for generating test cases from the targeted format for fuzz testing or may be saved for later usage.

Given the *T^{base}* model 1 as trained in the previous step, at least one further specialized machine learning, particularly transformer, model 2 of a same architecture may be obtained that is not only capable of generating data from the correct format, but that may be specific to a characteristic of the software program to trigger a specific type of vulnerability or bug. This setting 100b may contribute to increasing an efficiency of the fuzzing process, thus particularly requiring less tests to be run.

To this end, a labelled training dataset may be provided, composed of pairs of test cases and their respective characteristic like a type of product or vulnerability. The *T^{base}* model 1 may be used to build multiple specialized machine learning models 2, preferably one per characteristic. Given *M* types of vulnerabilities, this step may produce *M* ≥ 1 machine learning models 2, denoted ${T}_{m}^{vuln}$, where *m* ∈ {1,..., *M*}. Each machine learning model *Tₘ* 2 may be trained by performing a fine-tuning only on the test cases of the respective characteristic with corresponding labels. The fine-tuning step may be performed via standard training or more efficient implementations, such as Low-Rank Adaptation (LoRA) (Edward J. Hu, Yelong Shen, Phillip Wallis, Zeyuan Allen-Zhu, Yuanzhi Li, Shean Wang, Lu Wang, and Weizhu Chen. Lora: Low-rank adaptation of large language models, 2021. cite arxiv:2106.09685) or Weight-Decomposed Low-Rank Adaptation (DoRA) (Shih-Yang Liu, Chien-Yi Wang, Hongxu Yin, Pavlo Molchanov, Yu-Chiang Frank Wang, Kwang-Ting Cheng, and Min-Hung Chen. DoRA: Weight-decomposed low-rank adaptation. In Ruslan Salakhutdinov, Zico Kolter, Katherine Heller, Adrian Weller, Nuria Oliver, Jonathan Scarlett, and Felix Berkenkamp, editors, Proceedings of the 41st International Conference on Machine Learning, volume 235 of Proceedings of Machine Learning Research, pages 32100-32121. PMLR, 21-27 Jul 2024).

It is possible to save the first *T^{base}* machine learning model 1 and the specialized fine-tuned machine learning models 2 ${T}_{m}^{vuln}$. Moreover, the fine-tuned versions may be saved in full or in a more efficient way, by storing them as a differential to the *T^{base}* model. This may be particularly interesting in conjunction with any low-rank fine-tuning method, where the differential is orders of magnitude smaller than the *T^{base}* model 1. To recover any of the characteristic-specific machine learning models 2, one may load the *T^{base}* model 1 and the differential, and apply a unifying operation (e.g., sum).

A goal of this setting 100b according to the invention may be to leverage previously found bugs or vulnerabilities in the target software program or product. The tested software program may have multiple versions over time or may be part of multiple product ranges. For code bases that are related, it may be highly likely that similar bug patterns may be found. If there are test cases that have found bugs in any of the versions of the tested software, these may be stored and used to build a training dataset that is specific to a given software program or product. The machine learning model(s) 1,2 may learn to generate new test cases that follow the patterns that have found bugs in the past.

The method according to the invention may rely on the *T^{base}* transformer, i.e. the first machine learning model 1 (setting 100c) as a starting step if all the data collected is unlabelled, or on the specialized transformers *Tₘ*, i.e. the specialized fine-tuned machine learning models 2, if characteristic labels are available for the dataset (setting 100d). In both cases, the model *T^{base}* 1 or the multiple models ${T}_{m}^{vuln}$ 2 may be fine-tuned either via a standard training or efficient fine-tuning (LoRA, DoRA, as described previously). The outcome may be either one model 1a *T^{prod}* derived from *T^{base}* 1, or up to *M* models ${T}_{m}^{prod}$ 2a derived from the ${T}_{m}^{vuln}$ 2. The resulting model(s) may be used in the fuzzing process. The training setups proposed above are represented in Fig. 2.

Once the machine learning model(s) mentioned as outcome at any of the previous steps are trained, they may be used to generate test cases for fuzzing. The fuzzer may request one or more test cases from the trained machine learning model(s). In the case of multiple machine learning models, the fuzzer may use multiple strategies to request test cases from the machine learning models. Some examples are: requesting a fixed number of test cases from each machine learning model, or proceed in a roundrobin generation, or randomize the number of test cases requested from each machine learning model. The fuzzer may then run each of the generated test cases on the target software program and observe if it produces a crash or not.

All the generated test cases may be stored for future training, or just the ones that trigger crashes. The machine learning model(s) 1,2 may be retrained or further fine-tuned periodically, as more test cases are collected. Alternatively, an online learning approach may be used, where the machine learning model(s) are constantly improved as the dataset expands. The functioning of the fuzzing loop above may be implemented by integrating the machine learning model(s) in the fuzzer, or by making the machine learning model(s) available remotely (e.g., on a server, via a REST API) for the fuzzer to invoke for requesting test cases.

The transformer architecture, along with the training code and prediction code may be implemented using any standard neural network library, such as Tensor-Flow or PyTorch.

The above explanation of the embodiments describes the present invention in the context of examples. Of course, individual features of the embodiments can be freely combined with each other, provided that this is technically reasonable, without leaving the scope of the present invention.

## Claims

1. A method (100) for generating test cases for testing a software program, comprising:
- Training (101) a first machine learning model (1) for a next-token prediction based on a training data set, the training data set comprising test cases for testing the software program in a code format,
- Providing (102) a labelled training data set, the labelled training data set comprising test cases that are each associated with at least one characteristic of the software program,
- Performing (103) a respective fine-tuning of the trained first machine learning model (1) for the next-token prediction based on the labelled training data set for each characteristic of the software program to provide a specialized machine learning model (2) for each respective characteristic,
- Generating (104) the test cases for testing the software program for at least one of the characteristics of the software program by utilizing the first machine learning model (1) and/or a respective specialized machine learning model (2) that was fine-tuned for said at least one of the characteristics.

2. The method (100) of claim 1, **characterized in that** the machine learning model is a transformer model and the training (101) is particularly performed by using a gradient descent and/or backpropagation algorithm.

3. The method (100) of any one of the preceding claims, **characterized in that** a respective characteristic of the software program represents a specific vulnerability and/or a specific bug and/or a customer specific adaptation and/or a product specific adaptation of the software program.

4. The method (100) of any one of the preceding claims, **characterized in that** the method (100) further comprises:
- Testing the software program via fuzz testing using the generated test cases,
- Documenting errors that arise during the testing.

5. The method (100) of claim 4, **characterized in that** the method (100) further comprises:
- Performing a further fine-tuning for the next-token prediction of the first machine learning model (1) and/or at least one of the specialized machine learning (2) models based on the documented errors, particularly based on test cases where the documented errors arose during the testing.

6. The method (100) of any one of the preceding claims, **characterized in that** the method (100) further comprises:
- Storing the specialized machine learning (2) models as a differential to the first machine learning model (1),
wherein generating (104) the test cases further comprises:
- Loading the first machine learning model (1) and a respective stored differential,
- Applying a unifying operation to recover a respective specialized machine learning model (2) associated with the stored differential.

7. The method (100) of any one of the preceding claims, **characterized in that** the software program is intended for a use in an electronic control unit (4) of a vehicle (3) and the code format corresponds to a communication protocol, particularly pertaining to a control area network bus.

8. A computer program (20), comprising instructions which, when the computer program (20) is executed by at least one computer (10), cause the computer (10) to carry out the method (100) of any one of the preceding claims.

9. A data processing apparatus (10), comprising means for carrying out the method (100) of any one of claims 1 to 7.

10. A computer-readable storage medium (15) comprising instructions which, when executed by at least one computer (10), cause the computer (10) to carry out the steps of the method (100) of any one of claims 1 to 7.
